# EUROPEAN PATENT APPLICATION

(11) **EP 1 632 739 A2**
(43) Date of publication of application: **08.03.2006**
(21) Application number: 05016077.9
(22) Date of filing: 25.07.2005
(51) Int. Cl.: F25D 11/00

(54) **High-safety eutectic plate, particularly for refrigerating the interior of refrigerated vans or the like**

(30) Priority: 03.09.2004 IT MI20041699
(71) Applicant: FIC S.p.A., 20122 Milano (IT)
(72) Inventor: Del Giorgio, Ludovico, 23020 Gordona, (Prov.of Sondrio) (IT)
(74) Representative: Modiano, Micaela Nadia

(57) **Abstract**

A high-safety eutectic plate (1a) particularly for refrigerating the interior of refrigerated vans or the like, comprising a container (2a) which delimits a cavity (3a) containing a eutectic solution, the cavity containing a heat exchanger (4a), which can be supplied with a refrigerating fluid for cooling the eutectic solution, the container (2a) being provided with at least two mutually opposite walls (5a, 6a), which can move apart or closer one another as a consequence of variations of the volume of the eutectic solution and/or of the pressure in the cavity (3a); in one (5a) of the two walls (5a, 6a) there is an opening (7a) closed by a closure element (8a) connected to the opposite wall (6a); the closure element (8a) can move, as a consequence of the relative movement of the two mutually opposite walls (5a, 6a), in order to clear the opening (7a) when a preset pressure is exceeded within the cavity (3a), so as to avoid the bursting of the container (2a) as a consequence of leaks of refrigerating fluid from the heat exchanger (4a).

## Description

The present invention relates to a high-safety eutectic plate, particularly for refrigerating the interior of refrigerated vans or the like.

As is known, refrigerated vans, in order to maintain a temperature significantly lower than 0 °C inside them, which is required in order to ensure correct preservation of the perishable food products that they transport, are generally provided with so-called eutectic plates, which are normally applied below the upper internal wall of the storage compartment of the van.

Such eutectic plates are generally constituted by a flat container, usually made of metallic material, which delimits a cavity containing a solution that can be frozen at a fixed temperature (eutectic solution) and a heat exchanger, which is generally constituted by a cooling coil connected to a refrigeration system.

In practice, the eutectic solution contained in the plates is frozen, generally when the van is not being used, by operating the refrigeration system. The eutectic plates, with the frozen solution, therefore ensure that the selected temperature is maintained inside the storage compartment of the van for the time required to transport and deliver the products placed in the storage compartment.

In recent years, the fluids that can be used in refrigeration systems have been the subject of increasingly restrictive environmental protection regulations. These regulations, by forbidding the use of certain widely used refrigerating fluids, have limited the range of fluids that can be used.

Environmentally-compatible and economically convenient fluids, such as for example carbon dioxide, toward which the refrigeration system manufacturing industry is becoming oriented, generally have higher operating pressures than the refrigeration fluids that are now prohibited. The sometimes considerable increase in working pressures has entailed a substantially complete resizing of refrigeration systems.

In the case of eutectic plates also, the increase in the operating pressures of the refrigerating fluid that is circulated in the cooling coil is a problem that is not easy to solve.

Since the cooling coil is placed within the eutectic solution, which is generally constituted by a saline solution, it can in fact be subject to corrosion, which causes leaks of refrigeration fluid inside the eutectic plate. Leaks of refrigeration fluid inside the eutectic plate can also occur as a consequence of the accidental failure of the cooling coil.

Such leaks of fluid at high pressures (which can reach 80 bars) may burst the container of the eutectic plate, with danger for the user and for people who might be in the vicinity of the eutectic plate.

In order to prevent this danger, apart from oversizing the components, which can be done only partially, since it increases significantly the weight of the plate, it has been proposed to use safety valves provided with springs or breakable disks, which connect the inside of the eutectic plate to the outside in case of overpressures caused by leaks of refrigerating fluid from the cooling coil.

However, these safety valves have limited reliability, since their opening can be hindered or even entirely prevented by the presence, at the valve, of accumulations of undissolved salts, dirt, ice, or by deterioration over time of the valve proper due to corrosion caused by contact with the eutectic solution.

The aim of the present invention is to solve the problems described above by providing a eutectic plate, particularly for refrigerating the interior of refrigerated vans or the like, that ensures high safety against the danger of failures of the container as a consequence of internal overpressures, regardless of the refrigerating fluid that is used and in any operating condition.

Within this aim, an object of the invention is to provide a eutectic plate that is capable of eliminating rapidly and very reliably the overpressures that might occur within the container of the eutectic plate as a consequence of accidental leaks of refrigerating fluid, thus avoiding the bursting of the container of the eutectic plate.

Another object of the invention is to provide a eutectic plate that is structurally simple and can be manufactured at competitive costs.

This aim and these and other objects that will become better apparent hereinafter are achieved by a eutectic plate particularly for refrigerating the interior of refrigerated vans or the like, comprising a container which delimits a cavity containing a eutectic solution, said cavity containing a heat exchanger, which can be supplied with a refrigerating fluid for cooling the eutectic solution, said container being provided with at least two mutually opposite walls which can move apart or closer one another as a consequence of the variations of the volume of the eutectic solution and/or of the pressure in said cavity, characterized in that in one of said two walls there is at least one opening closed by a closure element connected to the opposite wall, said closure element being movable, as a consequence of the relative movement of said two walls, in order to clear said opening when a preset pressure is exceeded within said cavity.

Further characteristics and advantages of the invention will become better apparent from the description of two preferred but not exclusive embodiments of the eutectic plate according to the invention, illustrated by way of non-limiting example in the accompanying drawings, wherein:
Figure 1 is a plan view of the eutectic plate according to the invention in a first embodiment;
Figure 2 is an enlarged-scale sectional view of Figure 1, taken along the line II-II, illustrating the eutectic plate according to the invention in normal operating conditions;
Figure 3 is an enlarged-scale view of a detail of Figure 2 in a particular operating condition;
Figure 4 is a sectional view, taken in a manner similar to Figure 2, illustrating the behavior of the eutectic plate in the presence of an accidental leak of refrigerating fluid;
Figure 5 is an enlarged-scale view of a detail of Figure 4 in a particular operating condition;
Figure 6 is a sectional view of the eutectic plate according to the invention in a second embodiment, taken in a manner similar to Figure 2, in normal operating conditions;
Figure 7 is a sectional view, taken in a manner similar to Figure 4, illustrating the behavior of the eutectic plate according to the invention in the second embodiment in the presence of an accidental leak of refrigerating fluid.

With reference to the figures, the eutectic plate according to the invention, generally designated in its two embodiments by the reference numerals 1a and 1b, comprises a container 2a, 2b, which delimits a cavity 3a, 3b that contains a eutectic solution.

A heat exchanger is arranged in the cavity 3a, 3b and is preferably constituted by a coil 4a, 4b, which can be supplied with a refrigerating fluid in order to cool the eutectic solution.

The container 2a, 2b is provided with least two mutually opposite walls 5a, 6a, 5b, 6b, which can move apart or closer one another as a consequence of variations of the volume of the eutectic solution and/or of the pressure in the cavity 3a, 3b.

According to the invention, at least one opening 7a, 7b is provided in one of said two walls 5a, 5b and is closed by a closure element 8a, 8b, which is connected to the opposite wall 6a, 6b. The closure element 8a, 8b can move, as a consequence of the relative movement of the two walls 5a, 6a, 5b, 6b, in order to clear the opening 7a, 7b when a preset pressure is exceeded in the cavity 3a, 3b.

More particularly, the container 2a, 2b, in both of the illustrated embodiments, is preferably composed of two pre-pressed metal plates, which face each other and are welded peripherally to each other so as to form the cavity 3a, 3b between them.

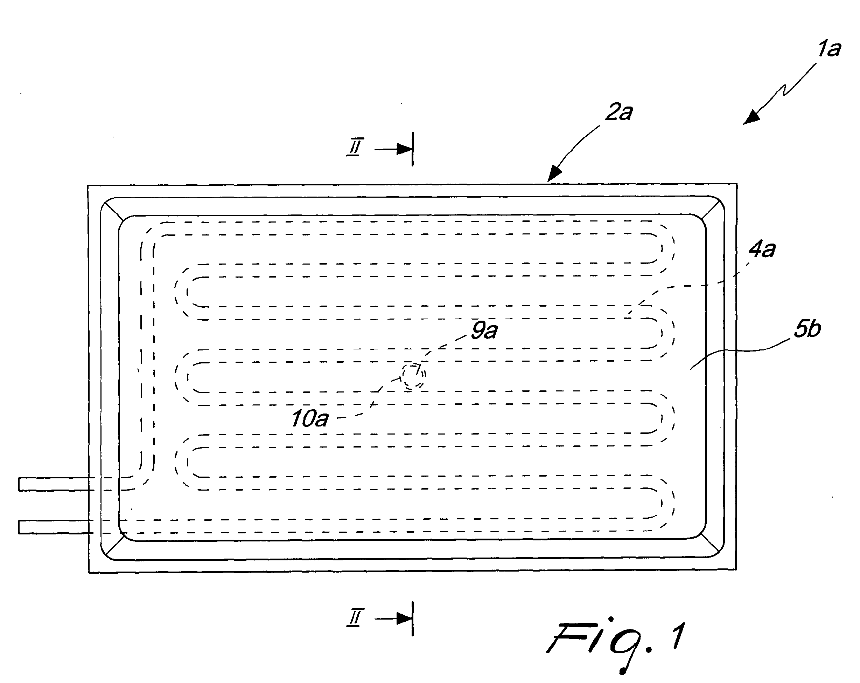

In the first embodiment, shown in Figures 1 to 5, the closure element 8a comprises a piston element 9a, which is fixed, at an axial end, to the wall 6a of the container 2a that lies opposite the wall 5a in which the opening 7a is formed. The piston element 9a is inserted coaxially, so that it can slide hermetically, in a cylindrical element 10a, which is hollow and open at its ends and is fixed, with one of its ends, to the wall 5a of the container 2a around the opening 7a. The piston element 9a is inserted through the opposite axial end of the cylindrical element 10a and can be disengaged, preferably by complete axial extraction, from the cylindrical element 10a as a consequence of the relative spacing of the two walls 5a, 6a caused by the exceeding of the preset pressure within the cavity 3a.

Preferably, between the piston element 9a and the cylindrical element 10a there is at least one interposed gasket 11a, which provides a sliding seal between the piston element 9a and the cylindrical element 10a.

In the first embodiment, two gaskets 11a are fitted on the piston element 9a, but the number of gaskets can vary according to the requirements.

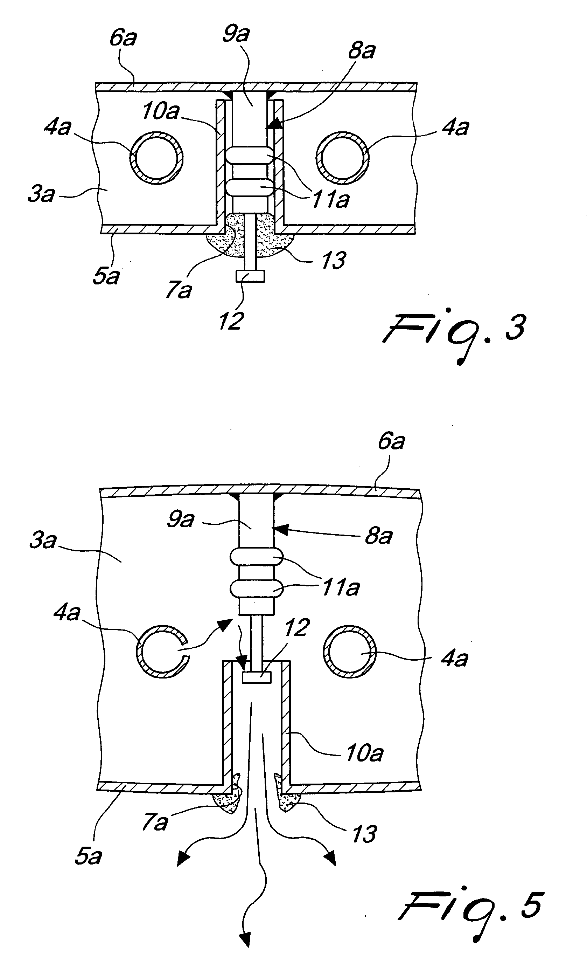

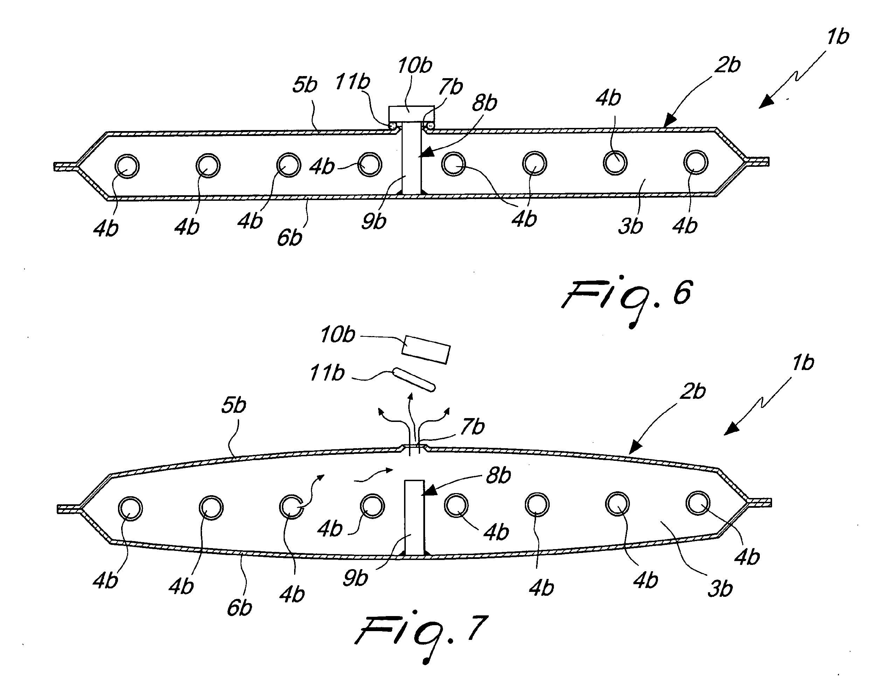

Advantageously, as shown in particular in Figures 3 and 5, an ice-breaking element 12 is provided at the opening 7a.

Such ice-breaking element 12 is connected to the axial end of the piston element 9a that protrudes from the opening 7a and is shaped so as to interfere with the ice 13 that might form on the opening 7a in order to break it when the piston element 9a disengages by extraction from the cylindrical element 10a. In this manner, evacuation of the refrigerating fluid from the container 2a is ensured even if ice or frost forms at the opening 7a.

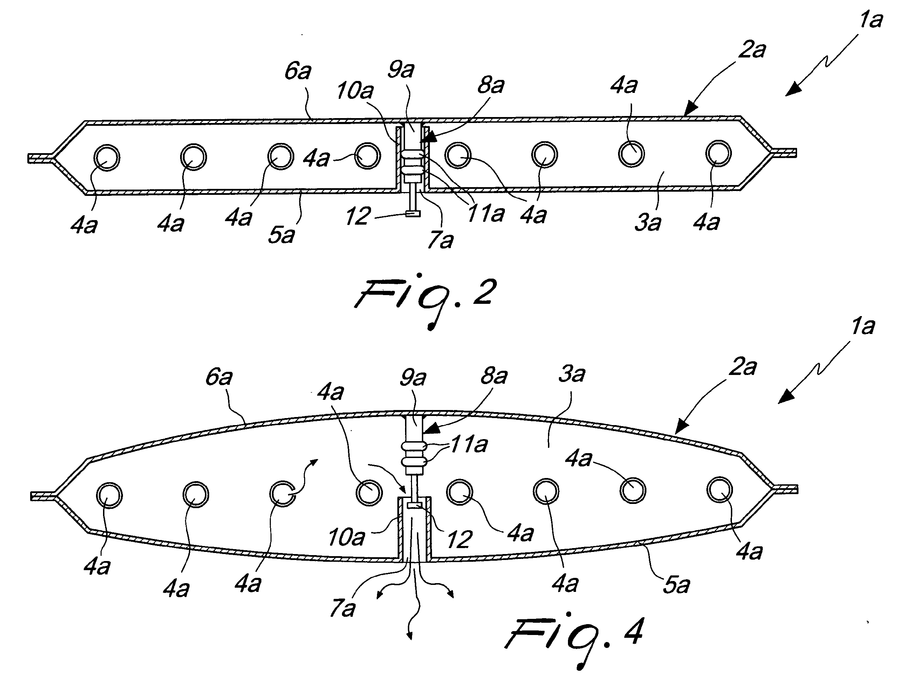

As shown in Figures 2-4, the ice-breaking element 12 can be constituted simply by the head of a screw, which is connected to the axial end of the piston element 9a that lies opposite its axial end fixed to the wall 6a.

In the second embodiment, shown in Figures 6 and 7, the closure element 8b comprises a piston element 9b, which is fixed, at an axial end, to the wall 6b of the container 2b that lies opposite with respect to the wall 5b in which the opening 7b is formed. The piston element 9b engages a cap element 10b, which is arranged so as to close the opening 7b. The piston element 9b can be disengaged by tearing from the cap element 10b as a consequence of the relative spacing of the two walls 5b and 6b caused by the exceeding of the preset pressure within the cavity 3b.

Preferably, the cap element 10b is arranged on the side of the wall 5b that is directed outwardly and the piston element 9b passes through the opening 7b in order to engage the cap element 10b.

Conveniently, a sealing gasket 11b is interposed between the cap element 10b and the wall 5b in which the opening 7b is formed.

Preferably, in both of the described embodiments, the opening 7a, 7b and the piston element 9a, 9b are arranged on the two walls 5a, 6a, 5b, 6b of the container 2a, 2b that have the largest surface and in a central region of the corresponding wall, so that the piston element 9a, 9b is affected even by limited overpressures.

In the two illustrated embodiments, the piston element 9a, 9b is coupled to the cylindrical element 10a or to the cap element 10b during the assembly of the two plates that form the container 2a, 2b of the eutectic plate.

In the first embodiment, during normal operation of the eutectic plate according to the invention, the piston element 9a slides within the cylindrical element 10a as a consequence of the mutual spacing or approach of the walls 5a, 6a caused by the increase or decrease of the volume of the eutectic solution produced by the freezing/thawing of the eutectic solution contained in the cavity 3a, as shown in Figures 2 and 3, without disengaging from the cylindrical element 10a and therefore ensuring the sealing of the eutectic solution.

When a sudden pressure increase occurs inside the container 2a, for example due to a leak of the refrigeration fluid that circulates in the coil 4a, such overpressure causes a deformation of the container 2a with mutual spacing of the walls 5a, 6a. As a consequence of this spacing, the piston element 9a disengages from the cylindrical element 10a, connecting the cavity 3a to the outside and thus allowing the external discharge of the refrigeration fluid, thus eliminating the overpressure, as shown in Figures 4 and 5. In this manner, the danger of bursting of the container 2a is effectively avoided.

It should be noted that during the disengagement of the piston element 9a from the cylindrical element 10a, the ice-breaking element 12, if provided, breaks the ice or frost 13 that may be present on the opening 7a, reliably clearing the opening 7a.

In this first embodiment, the preset pressure beyond which the piston element 9a disengages from the cylindrical element 10a, connecting the cavity 3a to the outside, can be changed according to the requirements by varying the length of the portion of the cylindrical element 10a along which the piston element 9a slides in order to disengage from the cylindrical element 10a.

In the second embodiment, in the normal operation of the eutectic plate according to the invention, the piston element 9b is engaged with the cap element 10b, which ensures closure of the opening 7b, as shown in Figure 6. The increase and decrease of the volume of the eutectic solution caused by the freezing/thawing of the eutectic solution contained in the cavity 3b is compensated by the deformation of the walls 5b, 6b except for the region at the piston element 9b and the cap element 10b.

If a sudden pressure increase occurs inside the container 2b, for example due to a leak of the refrigerating fluid that circulates within the coil 4b, such overpressure has the effect of causing the separation of the piston element 9b from the cap element 10b, clearing the opening 7b and thus connecting the cavity 3b to the outside, allowing the external discharge of the refrigerating fluid, thus eliminating the overpressure, as shown in Figure 7. In this manner, the danger of bursting of the container 2b is effectively avoided.

In this second embodiment, the preset pressure beyond which the piston element 9b disengages from the cap element 10b, connecting the cavity 3b to the outside, can be changed according to the requirements by changing the tearing resistance between the piston element 9b and the cap element 10b.

In practice it has been found that the eutectic plate according to the invention fully achieves the intended aim, since by being able to eliminate rapidly and very reliably the overpressures that might occur inside it, it ensures high safety against the danger of failures of the container as a consequence of internal overpressures, regardless of the refrigerating fluid that is used and in any operating condition.

The eutectic plate thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2004A001699 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A eutectic plate particularly for refrigerating the interior of refrigerated vans or the like, comprising a container which delimits a cavity containing a eutectic solution, said cavity containing a heat exchanger, which can be supplied with a refrigerating fluid for cooling the eutectic solution, said container being provided with at least two mutually opposite walls which can move apart or closer one another as a consequence of the variations of the volume of the eutectic solution and/or of the pressure in said cavity, **characterized in that** in one of said two walls there is at least one opening closed by a closure element connected to the opposite wall, said closure element being movable, as a consequence of the relative movement of said two walls, in order to clear said opening when a preset pressure is exceeded within said cavity.

2. The eutectic plate according to claim 1, **characterized in that** said container comprises two metallic plates, which face each other and are welded peripherally to each other in order to form said cavity between them.

3. The eutectic plate according to claims 1 and 2, **characterized in that** said closure element comprises a piston element, which is fixed, at an axial end, to the wall of the container that lies opposite the wall in which said opening is formed, said piston element being inserted so that it can slide hermetically in a cylindrical element, which is hollow and open at its ends and is fixed, with one of its ends, to said wall of the container around said opening; said piston element being disengageable from said cylindrical element as a consequence of the relative spacing of said two walls caused by the exceeding of said preset pressure within said cavity.

4. The eutectic plate according to one or more of the preceding claims, **characterized in that** said piston element can be extracted axially from said cylindrical element as a consequence of the relative spacing of said two walls caused by the exceeding of said preset pressure within said cavity.

5. The eutectic plate according to one or more of the preceding claims, **characterized in that** at least one sliding sealing gasket is interposed between said piston element and said cylindrical element.

6. The eutectic plate according to one or more of the preceding claims, **characterized in that** it comprises an ice-breaking element at said opening.

7. The eutectic plate according to one or more of the preceding claims, **characterized in that** said ice-breaking element is connected to the axial end of said piston element that protrudes from said opening, said ice-breaking element interfering with any ice that is present on said opening in order to break it when said piston element disengages from said cylindrical element.

8. The eutectic plate according to one or more of the preceding claims, **characterized in that** said closure element comprises a piston element, which is fixed at one of its axial ends to the wall of the container that lies opposite the wall in which said opening is formed, said piston element engaging a cap element arranged so as to close said opening; said piston element being disengageable by tearing from said cap element as a consequence of the relative spacing of said two walls caused by the exceeding of said preset pressure in said cavity.

9. The eutectic plate according to one or more of the preceding claims, **characterized in that** a sealing gasket is interposed between said cap element and said wall in which said opening is formed.

10. The eutectic plate according to one or more of the preceding claims, **characterized in that** said cap element is arranged on the side of said wall that is directed outwardly, and **in that** said piston element passes through said opening.

11. The eutectic plate according to one or more of the preceding claims, **characterized in that** said opening and said piston element are arranged on the walls of the container that have the largest surface.

12. The eutectic plate according to one or more of the preceding claims, **characterized in that** said opening and said piston element are arranged in a central region of the corresponding wall of the container.
